(19) Europäisches Patentamt
European Patent Office
Office européen des brevets

(11) Veröffentlichungsnummer : **0 324 337 B1**

(12) # EUROPÄISCHE PATENTSCHRIFT

(45) Veröffentlichungstag der Patentschrift :
**30.09.92 Patentblatt 92/40**

(21) Anmeldenummer : **89100005.1**

(22) Anmeldetag : **02.01.89**

(51) Int. Cl.$^5$ : **C08G 18/10,** C08G 18/12, C08G 18/28, C08G 18/80, D06N 3/14, D06M 15/564, C08G 18/48, C09D 175/00, B05D 7/12, C14C 11/00

(54) **Hitzehärtbare Beschichtungszusammensetzung auf Polyurethanharnstoff-Basis.**

Die Akte enthält technische Angaben, die nach dem Eingang der Anmeldung eingereicht wurden und die nicht in dieserPatentschrift enthalten sind.

(30) Priorität : **09.01.88 DE 3800434**

(43) Veröffentlichungstag der Anmeldung :
**19.07.89 Patentblatt 89/29**

(45) Bekanntmachung des Hinweises auf die Patenterteilung :
**30.09.92 Patentblatt 92/40**

(84) Benannte Vertragsstaaten :
**AT BE DE ES FR GB IT NL**

(56) Entgegenhaltungen :
**EP-A- 0 013 890**
**EP-A- 0 034 272**
**EP-A- 0 059 962**
**GB-A- 2 048 289**

(73) Patentinhaber : **BAYER AG**
**W-5090 Leverkusen 1 Bayerwerk (DE)**

(72) Erfinder : **Pedain, Josef, Dr.**
**Haferkamp 6**
**W-5000 Köln 80 (DE)**
Erfinder : **Thoma, Wilhelm, Dr.**
**Birkenweg 25**
**W-5090 Leverkusen 3 (DE)**
Erfinder : **Schröer, Walter, Dr.**
**Nicolai-Hartmann-Strasse 29**
**W-5090 Leverkusen 1 (DE)**
Erfinder : **Kling, Waldemar**
**Sperberweg 1**
**W-5067 Kürten (DE)**

EP 0 324 337 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine hitzehärtbare nicht-wäßrige Beschichtungszusammensetzung auf Polyurethanharnstoff-Basis, insbesondere zur wasserdampfdurchlässigen Beschichtung von Substraten.

Wasserdampfdurchlässige Beschichtungen lassen sich auf verschiedenen Wegen erzeugen. Seit geraumer Zeit ist ein Verfahren bekannt, das die Erzeugung von Mikroporen in einer Beschichtung auf physikalischem Wege ermöglicht; ein Polymeres (und hier wie im folgenden ist darunter hauptsächlich ein Polyurethan zu verstehen), das in einem Löser gelöst ist, wird auf ein Substrat oder einen Trennträger schithtförmig aufgebracht und im nassen Zustand in ein Bad geführt, das einen Nithtlöser für das Polymere enthält, welcher allerdings mit dem Löser mischbar ist. Der Nichtlöser dringt infolgedessen in die Lösungsschicht ein, wo er den Festkörper allmählich ausfällt, koaguliert. Bei der Trocknung des so entstandenen verfestigten Films hinterlassen der entweichende Löser wie auch der Nichtlöser Mikrokanäle, die in der Beschichtung für den Wasserdampftransport zur Verfügung stehen.

In ähnlicher Weise lassen sich nach Beimischung von Saltzpulvern zur Polymerlösung Überzüge erzeugen, aus denen mit Wasser das Salz unter Hinterlassung von Mikrokavitationen ausgewaschen werden kann.

Auch die Perforation von kompakten Folien mit Hilfe energiereicher Elektronenstrahlen führt zu laminierbaren Filmen mit hoher Wasserdampfdurchlässigkeit (in der Regel ist beim wasserdampfdurchlässigen Überzug das pro Zeit - und Flächeneinheit transportierte Wasserdampfvolumen mehr als 10mal so hoch wie bei einem üblichen kompakten Film).

Diese Verfahren besitzen generell den Nachteil, daß sie chemisch kompliziert oder apparativ aufwendig sind oder aber erhebliche Abfallprobleme aufwerfen.

Neuerdings wird eine Variante der Mikroporös-Beschichtung technisch durchgeführt, die ohne die technologisch komplizierte Tauchbadtechnologie auskommt, aber im wesentlichen zu gleichen Ergebnissen führt. Bei diesem Verfahren, auch als Verdampfungskoagulation bekannt, wird der Lösung des Polymeren in einem niedrig siedenden Löser so viel Wasser zugesetzt, daß die resultierende Streichpaste gerade noch stabil und applizierbar ist.

Beim Abdunsten entweicht der organische Löser zuerst; das sich immer mehr anreichernde Wasser fällt den Festkörper wie beim Tauchverfahren aus und entweicht schließlich beim Trocknen unter Hinterlassen einer mikroporösen Struktur in der Folie.

Alle diese Verfahren haben jedoch den wesentlichen Nachteil, daß Mikrokanäle oder Mikrokavitationen eine Schwächung des wasserdampfdurchlässigen Überzuges bewirken. Das heißt, daß mechanische Zugfestigkeit und Abriebbeständigkeit gegenüber einem kompakten Film deutlich abfallen.

Es hat daher von Anfang an nicht an Bemühungen gefehlt, Wasserdampfdurchlässigkeit in einem Überzug nicht nur durch physikalische Methoden)sondern auch auf chemischem Wege zu erzeugen. Bis ins Jahr 1962 gehen Bemühungen zurück, solche Beschichtungen mit Polyurethanen zu erzeugen, die teilweise aus wasserlöslichen oder hydrophilen Aufbaukomponenten bestehen. In den DE-ASen 1 220 384 und 1 226 071 werden Polyurethane beschrieben, die aus Glykolen, Diisocyanaten und einer difunktionellen hydrophilen Aufbaukomponente, die die Wasserdampfdurchlässigkeit der Beschichtung bewirkt und ein Makrodiol darstellt, bestehen. Es handelt sich in beiden Fällen um Polyethylenglykol mit einem Molgewicht um 1.000; die beiden Anmeldungen unterscheiden sich nur hinsichtlich des "Vulkanisations"-Mechanismus, also der nachträglichen Vernetzung des Polyurethanelastomeren.

Ebenfalls wasserdampfdurchlässig sind kompakte Deckstriche auf Verbundstoffen aus textilen Substraten und mikroporösen Beschichtungen, wie sie in DE-OS 2 020 153 beschrieben werden.

Auch als Diolkomponente in Polyesterpolyolen für Polyurethanelastomere lassen sich Polyethylenglykole verwenden, um, wie die japanische Patentanmeldung J 61 009 423 lehrt, gut wasserdampfdurchlässige Beschichtungen mit vernachlässigbarer Wasserquellung zu erzeugen.

Segmentierte Polyurethanelastomere aus Polyethylenglykolen beansprucht auch die Europäische Patentanmeldung 52 915.

Auch andere organische hydrophile Komponenten werden Polyurethanen zugesetzt, um wasserdampfdurchlässige Beschichtungen und Verbundmaterialien herzustellen; insbesondere Poly-$\gamma$-methylglutamat kann Polyurethanen zugesetzt, in ihnen als Aufbaukomponente verwendet, oder ihnen aufgepfropft werden. Aus der Vielzahl der diese Anwendung beschreibenden Literaturstellen seien hier erwähnt die DE-OSen 1 922 329 und 1 949 060 sowie die japanischen Patentanmeldungen J 58 057 420 und J 59 036 781.

Von besonderem technischen Interesse für das Gebiet der wasserdampfdurchlässigen kompakten Beschichtungsmittel sind in jüngster Zeit hauptsächlich Polyurethane, die als Aufbaukomponenten die oben erwähnten Polyethylenglykole enthalten; diese Rohstoffe sind preisgünstig, allgemein verfügbar und technisch gut zugänglich. Auch die daraus erhältlichen Polyurethane und Polyurethanharnstoffe sind im Prinzip gut bekannt. Im Gegensatz zu den weit verbreiteten Polyurethanharnstoffen, die als Makrodiole Polyester, Polycarbonate oder Polyether enthalten, sind sie wasseraufnahmefähig, permeabel für Wasserdampf, gelegentlich sogar im Wasser stark quellbar oder löslich.

Aus diesem Grunde werden den die Hydrophilie verursachenden Polyethylenglykolen hydrophobe Polyole beigemischt; aus diesen Gemischen lassen sich Polyurethane bzw. Polyurethanharnstoffe herstellen, die gute Wasserdampfdurchlässigkeit mit guter Resistenz gegen die Einflüsse flüssigen Wassers verbinden.

In der DE-OS 2 902 090 (=US-PS 4 284 756) werden Zweikomponentenbeschichtungssysteme aus ketoxim-blockierten Prepolymeren und zweikernigen, cycloaliphatischen Diaminen als Vernetzer/Härter, mit höchstem 15 Gew.-% Lösemittel in der Zubereitung beansprucht. Dabei können die Polyhydroxyverbindungen in den blockierten Prepolymeren, zum Beispiel Polypropylenoxide gegebenenfalls auch Ethylenoxideinheiten enthalten.

Aus den EP-A 13 890 und 34 272 sind hitzehärtbare Beschichtungsmassen bekannt, die Ketoximblockierte NCO-Präpolymerisate, Vernetzer entsprechend Komponente B der erfindungsgemäßen Zusammensetzung, gegebenenfalls organische Lösungsmittel und weitere Zusätze enthalten. Die EP-A 13 890 und 34 272 enthalten keinen Hinweis darauf, daß die Polyhydroxyl-Komponenten einen Ethylenoxid-Anteil in Höhe von 20 bis 100 Gew.-% enthalten sollen.

In der EP-A 59 962 werden ähnliche Beschichtungsmassen beschrieben, wobei jedoch keine aromatischen Polyisocyanate zur Herstellung des NCO-Präpolymerisats eingesetzt werden.

Die GB-A 20 48 289 betrifft wäßrige Beschichtungsmittel auf Basis von PU-Reaktionsprodukten aus Ketoxim-blockierten NCO-Präpolymerisaten, Polyamin-Vernetzern und Säuren. Als Polyamine werden gegebenenfalls Ethergruppen enthaltende aliphatische Polyamine eingesetzt; 4,4'-Diaminodicyclohexylmethane werden nicht erwähnt.

Diese Literaturstellen konnten die erfindungsgemäße Zusammensetzung weder einzeln noch in Kombination nahelegen.

Die vorliegende Erfindung betrifft eine hitzehärtbare nicht-wäßrige Beschithtungszusammensetzung enthaltend

A) ein durchschnittlich 2 - 4 ketoxim-blockierte NCO-Gruppen aufweisendes Prepolymerisat mit einem durchschnittlichen Molekulargewicht von 500 - 15.000 auf Basis eines aromatischen Polyisocyanats und einer Polyhydroxykomponente, die 40 bis 80 Gew.-% Ethylenoxid- Auteil enthält und

B) einem Vernetzer der Formel

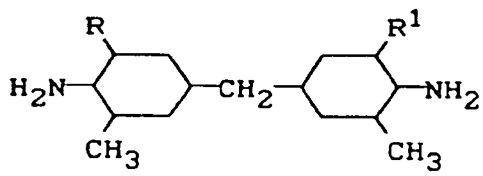

in der R, $R^1$ H oder $C_1$-$C_4$-Alkyl bezeichnen, wobei das Äquivalentverhältnis von blockierten NCO-Gruppen in A) zu $NH_2$-Gruppen in B) zwischen 1,35 : 1 und 0,95 : 1 liegt.

Die Beschichtungszusammensetzung kann weiterhin Pigmente, Füllstoffe, Lösemittel und weitere für Beschichtungsmittel übliche Zusatzstoffe enthalten.

Insbesondere kann die Beschichtungszusammensetzung auch aliphatische und/oder aromatische PUR-Lösungen enthalten.

Die Feststoffkonzentration der Beschichtungszusammensetzung beträgt vorzugsweise 35 - 100 Gew.-%, besonders bevorzugt 50 - 90 Gew.-%.

Für den Aufbau der ketoxim-blockierten NCO-Prepolymerisate A) kommen aromatische Diisocyanate, wie sie z. B. in den US-PSen 3 984 607 und 4 035 213, der DE-OS 2 402 840 bzw. DE-OS 2 457 387 beschrieben sind, in Frage. Bevorzugt sind 2,4'- bzw. 4,4'-Diisocyanatodiphenylmethan, die isomeren Toluylendiisocyanate sowie insbesondere Gemische dieser Diisocyanate.

Als Reaktionspartner für diese Diisocyanate zur Herstellung der NCO-Prepolymerisate dienen Polyhydroxykomponenten, die 40 - 40 Gew.-%, Ethylenoxid Anteil enthalten, z. B. Polyhydroxyverbindungen, die 2 - 4 Hydroxylgruppen aufweisen und ein Molekulargewicht von 500 - 10.000, vorzugsweise 1.000 - 6.000, haben und wie sie im Detail ebenfalls in den oben genannten Publikationen beschrieben werden.

Bevorzugt entstammen die ethylenoxideinheiten-aufweisenden Polyhydroxykomponenten den folgenden Klassen: 2 - 3 Hydroxylgruppen aufweisende Polyether; Propylenoxid-Polyether; Ethylenoxid-Polyether; 2 - 3 Hydroxylgruppen aufweisende Polyester, vorzugsweise mit einem mittleren Molekulargewicht von 1.000 - 6.000; Gemische aus Polyhydroxypolyethern, z. B. den oben genannten, und Polyhydroxypolyestern, z. B. Hydroxypolyester aus Adipinsäure, Hexandiol-1,6 und Neopentylglykol vom mittleren Molekulargewicht 1.000 -

3.000 oder Hydroxypolycarbonate aus Hexandiol, Hydroxyethoxyhexanol, Hydroxypolycaprolacton und Diphenylcarbonat.

Der Polyetheranteil in den Mischungen beträgt bevorzugt 30 - 99 Gew.-%, besonders bevorzugt 40 - 90 Gew.-%.

Bei der Herstellung der NCO-Prepolymerisate können gegebenenfalls auch niedermolekulare Diole mit einem Molekulargewicht von weniger als etwa 300 mitverwendet werden, wie sie als Kettenverlängerungsmittel an sich bekannt sind. Bevorzugt sind in diesem Zusammenhang Butandiol-1,4 und Hexandiol-1,6.

Die Herstellung der NCO-Prepolymerisate erfolgt in an sich bekannter Weise, indem man die genannten Polyhydroxylverbindungen mit überschüssigem Diisocyanat, vorzugsweise bei ca. 70 - 110°C umsetzt. Man wählt hierbei im allgemeinen ein NCO/OH-Verhältnis von 1,5 : 1 bis 6,0 : 1, vorzugsweise von 1,7 : 1 bis 2,5 : 1.

Als Blockierungsmittel für die NCO-Prepolymerisate kommen zum Beispiel Ketoxime aus Hydroxylamin und Ketonen wie Aceton, Methylethylketon, Diethylketon, Cyclohexanon, Acetophenon und Benzophenon in Frage.

Bevorzugtes Blockierungsmittel ist Methylethylketoxim (Butanonoxim). Die Blockierungsreaktion wird z. B. in der Weise durchgeführt, daß man das NCO-Prepolymerisat bevorzugt mit stöchiometrischen Mengen an Ketoxim bei erhöhter Temperatur, zum Beispiel 70 - 100°C, bis zum Verschwinden der NCO-Gruppen umsetzt.

Als Vernetzerkomponente B) für die blockierten NCO-Prepolymerisate dient vorzugsweise 4,4′-Diamino-3,3′-dimethyl-dicyclohexylmethan, ein bei Raumtemperatur flüssiges, aliphatisches Diamin mit sehr geringem Dampfdruck.

Bei den erfindungsgemäßen Beschichtungszusammensetzungen beträgt das Äquivalentverhältnis von blockierten NCO-Gruppen in A) zu $NH_2$-Gruppen in B) vorzugsweise 1,25 : 1 bis 1 : 1.

Die erfindungsgemäßen Zusammensetzungen finden insbesondere zur Beschichtung von textilen Flächengebilden und Leder Verwendung. Von besonderem Vorteil ist, daß mit ihrer Hilfe wasserdampfdurchlässige Beschichtungen erzeugt werden können. Die Erfindung betrifft dementsprechend weiterhin ein Verfahren zur Beschichtung, insbesondere wasserdampfdurchlässigen Beschichtung, von Substraten, vorzugsweise textilen Flächengebilden und Leder, das dadurch gekennzeichnet ist, daß man die erfindungsgemäßen Zusammensetzungen verwendet.

Mit den hitzehärtbaren Reaktivgemischen können (wasserdampfdurchlässige) Beschichtungen auf den in der Praxis üblichen Beschichtungsanlagen sowohl nach dem Direktals auch nach dem Umkehrbeschichtungsverfahren hergestellt werden. Hierbei ist es möglich, in Abhängigkeit von dem jeweiligen spezifischen chemischen Aufbau des NCO-Prepolymerisates, eingenschaftsmäßig verschiedene Schichten wie zum Beispiel Haft-, Zwischen- oder Deckschichten, zu erzeugen.

Zur Herstellung einer Umkehrbeschichtung aus den erfindungsgemäßen Produkten trägt man z. B. zuerst auf einen geeigneten Zwischenträger, z. B. ein Trennpapier, das Reaktivgemisch für den Deckstrich in einer Menge von ca. 30 - 100 g/m² auf, härtet im Trockenkanal aus, bringt auf den trockenen Deckstrich das Reaktivgemisch für den Haftstrich ebenfalls in einer Menge von ca. 30 - 100 g/m² auf, kaschiert das Substrat hinzu, härtet die Beschichtung in einem weiteren Trockenkanal bei ca. 120 -190°C, vorzugsweise 150 - 160°C, aus und zieht das beschichtete Substrat vom Trennträger ab. Selbstverständlich ist es aber auch möglich, nur den Deck- oder den Haftstrich aus den erfindungsgemäßen Beschichtungsmassen zu erzeugen und für den anderen Strich ein konventionelles Beschichtungssystem einzusetzen.

Wie schon erwähnt, können die Reaktivgemische auch im Direktstreichverfahren unmittelbar auf das textile Substrat aufgebracht werden.

Die erfindungsgemäßen Beschichtungszusammensetzungen können auch mit 1- oder 2-Komponenten-PUR in Lösung oder Dispersion (s.z.B. DE-PS 2 457 387 und DE-PS 3 134 161) verschnitten werden. Die hierzu verwendeten PUR können hydrophob oder hydrophil sein.

Werden aus den erfindungsgemäßen Beschichtungsmassen Zwischenschichten hergestellt, dann setzt man ihnen gegebenenfalls beim Erhitzen Gase abspaltende Verbindungen als Treibmittel sowie zweckmäßigerweise auch Schaumstabilisatoren zu. Geeignete Zusätze werden zum Beispiel in DE-OS 1 794 006 (GB-PS 1 211 339) sowie in US-PS 3 262 805 beschrieben.

Die Vorteile der erfindungsgemäßen Beschichtungszusammensetzungen bzw. des erfindungsgemäßen Verfahrens zur Herstellung (wasserdampfdurchlässiger) beschichteter Substrate sind folgende:

1. Hoher Feststoffgehalt der Streichpasten, also relativ geringer Lösemittelgehalt, 10 - 50 Gew.-%.
2. Lange Topfzeit der Streichpasten, mehr als 14 Tage, nach Zusatz des Vernetzers gemäß B).
3. Beschichtungen mit hoher Feststoffauflage pro Fläche, z. B. 50 - 150 g/m² sind herstellbar.
4. Hohe Wasserdampfdurchlässigkeit, 2 - 8 g/cm² h nach IUP15, bei gleichzeitig hoher Feststoffauflage.
5. Hohe Wasserdichte der Beschichtungsartikel am Original, nach Waschen und/oder Chemischreinigung.
6. Geringer Abrieb der kompakten Beschichtungsoberfläche.

7. Es entstehen keine umweltbelastenden Fällbadflüssigkeiten wie etwa bei der Koagulation von DMF-Lösungen in Wasser.

8. Normale Streich-, Rakel- und Trockentechnik im Gegensatz zu den diffizilen Streich- und Trockenbedingungen bei der Herstellung wasserdampfdurchlässiger, mikroporöser Schichten nach dem Verfahren der Verdampfungskoagulation.

Die Erfindung betrifft weiterhin die unter Verwendung der erfindungsgemäßen Zusammensetzungen beschichteten Substrate.

## Beispiele

### Beispiel 1

Ketoxim-blockiertes Prepolymer (erfindungsgemäß)

340 g eines linearen Polyethers aus 50 Gew.-% Ethylenoxid und 50 Gew.-% Propylenoxid (gestartet auf 1,2-Propylenglykol) mit der OHZ 56 und 340 g eines trifunktionellen Polyethers aus 27,5 Gew.-% Propylenoxid und 72,5 Gew.-% Ethylenoxid (gestartet auf Glycerin) mit der OHZ 36, enthaltend 170 g eines homogen dispergierten Polyharnstoffs aus Toluylendiisocyanat (2,4- : 2,6-Isomerengemisch = 80 : 20) und Hydrazinhydrat werden mit 150 g des gleichen Isomerengemisches Toluylendiisocyanat in der Schmelze bei 90°C umgesetzt. Das entstandene NCO-Prepolymer wird mit 102 g Butanonoxim bei 90°C blockiert; NCO-Gehalt; 4,45 %, Viskosität; 50.000 mPa.s/ 25°C.

a)Direktbeschichtung

1.000 g des oben beschriebenen blockierten, hydrophilen Prepolymers werden mit 20 g feinteiliger Kieselsäure (Aerosil 200; Degussa) und 125 g 4,4′-Diamino-3,3′-dimethyldicyclohexylmethan vermischt.

Ein Polyamid-Taft, der mit 15 g/l eines handelsüblichen Fluoralkylsulfonamids vorbehandelt ist, wird mit einem 1 mm Luftrakel mit der beschriebenen Streichpaste grundiert. Kanaltemperatur 120 -160°C. In einem zweiten Durchlauf wird in analoger Weise mit der gleichen Streichpaste der Deck- oder Schlußstrich aufgerakelt. Gesamtfeststoffauflage 30 g/cm$^2$ . Der gut wasserdampfdurchlässige Artikel hat eine Wasserdichte von 2.000 mm WS.

b)Transferbeschichtung

1.000 g des oben beschriebenen blockierten, hydrophilen Prepolymer werden mit 100 g eines Gemisches alkylierter aromatischer Kohlenwasserstoffe (Solvesso 100; Esso) verdünnt. Nach Zusatz von 15 g eines oxethylierten Dimethylpolysiloxans als Verlaufmittel, 15 g feinteiliger Kieselsäure (Aerosil 200; Degussa) und 120 g 4,4′-Diamino-3,3′-dicyclohexylmethan liegt nach gutem Mischen die gebrauchsfertige Streichpaste vor.

Auf einem geprägten Trennpapier erzeugt man mit dieser Streichpaste den Deckstrich, Trocknung und Reaktion bei 120 - 160°C; Auflage (Feststoff) 50 g/m$^2$ . Mit einer analog bereiteten Haftstrichpaste, 2 % feinteilige Kieselsäure (Aerosil 200; Degussa) ohne Silicon-Verlaufmittel, wird ein Kaschierstrich gerakelt, ein CO/PES-Gewebe zukaschiert, getrocknet und vernetzt, 120 - 160°C. Gesamtauflage: 90 g/m$^2$ . Wasserdampfdurchlässigkeit nach IUP 15 beträgt ca. 3 mg/cm$^2$ h (DIN 5333). Die Wasserdichte ist am Original, nach 3x Chemischreinigung bzw. nach 3x Wäsche größer als 2.000 mm WS.

### Beispiel 2

Deckstrichpaste 1 (erfindungsgemäß)

1.000 g des in Beispiel 1 beschriebenen blockierten, hydrophilen Prepolymers werden mit 150 g einer 35 %igen Lösung eines aromatischen Einkomponenten-Polyurethans in DMF/Toluol/Methylethylketon verschnitten. Zur Vernetzung der Prepolymeren fügt man 125 g 4,4′-Diamino-3,3′-dimethyl-dicyclohexylmethan hinzu. Die 92,3 %ige Zubereitung, Viskosität ca. 35.000 mPa.s/25°C, wird mit 100 g Titandioxid pigmentiert.

Herstellung der 35 %igen Einkomponente-PUR-Lösung: 706 g eines 1,2-Propylenglykolpolyethers von der OH-Zahl 56 werden mit 240 g Diphenylmethan-4,4′-diisocyanat in 660 g Toluol bei 100°C zum NCO-Prepolymeren umgesetzt und nach Zugabe von 54 g Butandiol-1,4 in 700 g DMF und 500 g Methylethylketon bei 80 °C zum Polyurethan aufgebaut. Die 35 %ige Lösung hat eine Viskosität von ca. 25.000 mPa.s/25°C.

Deckstrichpaste 2 (erfindungsgemäß)

1.000 g des in Beispiel 1 beschriebenen blockierten, hydrophilen Prepolymers werden mit 200 g einer 45 %igen Lösung eines hydrophilen, aromatischen Einkomponenten-Polyurethans in DMF/Toluol verschnitten. Als Vernetzer für das blockierte NCO-Prepolymer fügt man 125 g des unter

Deckstrichpaste 1 genannten Diamins. Die 91,7 %ige Streichpaste hat eine Viskosität von ca. 38.000 mPa.s/ 25°C.

Herstellung der 45 %igen Einkomp.-PUR-Lösung: 1.500 g eines Adipinsäurepolyesters aus Hexandiol-1,6/ Neopentylglykol = 65 : 35 der OHZ 56, 1.500 g eines Polyethers aus Ethylenoxid, gestartet auf Diethylenglykol, der OHZ 56, werden im Gemisch mit 225 g Butandiol-1,4 mit 500 g 4,4′-Diisocyanato-diphenylmethan in 1.820 g Toluol und 2.730 g DMF bei 70°C umgesetzt, Viskosität 40.000 mPa.s/25°C.

Transferbeschichtung

Die aus den Deckstrichpasten 1 und 2 hergestellten Deckstriche (Vernetzungstemperatur 150 - 160°C) werden mit der hydrophilen, 45 %igen Einkomp.-Polyurethan-Lösung als Haftstrich mit einem CO/PES Gewebe kaschiert. Die Artikel mit einer Gesamt-PUR-Auflage von ca. 70 $g/m^2$ zeigen eine Wasserdampfdurchlässigkeit von 3,5 $mg/cm^2$ h nach IUP 15.

Beispiel 3

Deckstrich (erfindungsgemäß)

1.000 g des in Beispiel 1 beschriebenen Polyethers aus 50 Gew.-% Ethylenoxid und 50 Gew.-% Propylenoxid (OHZ 56), 800 g eines Polyethers aus 100 % Ethylenoxid (OHZ 56) und 200 g eines Propylenglykolpolyethers aus 100 % Propylenoxid (OHZ 56), die 200 g eines homogen dispergierten Polyharnstoffs enthalten (siehe Beispiel 1) werden mit 522 g 2,6-Toluylendiisocyanat bei 80 -90°C umgesetzt. Die NCO-Gruppen des Prepolymeren werden anschließend mit 350 g Butanonoxim zur Blockierung bei 80°C umgesetzt. NCO-Gehalt: 5,45 %, Viskosität 35.000 mPa.s/25°C.

1.000 g dieses hydrophilen Prepolymeren werden mit 154 g 4,4′-Diamino-3,3′-dimethyl-dicyclohexylmethan vermischt und zur Herstellung des Deckstrichs verwendet.

Haftstrich

1.000 g eines Polyestercarbonats der OHZ 56 aus Hydroxycapronsäure-ω-hydroxy-hexylester und Diphenylcarbonat und 1.000 g eines Dihydroxy-polyethylenglykols der OHZ 56 werden nach dem Entwässern mit einem Gemisch aus 255 g Isophorondiisocyanat und 59 g Hexamethylendiisocyanat bei 100°C zum NCO-Prepolymer umgesetzt; Reaktionsdauer 90 min. Nach dem Lösen des Prepolymers in 1.170 g Toluol wird bei ca. 25°C eine Lösung von 25 g Hydrazinhydrat in 936 g i-Propanol und 234 g 1-Methoxypropanol-2 zugetropft. Man erhält nach 2-stündigem Rühren eine ca. 50 %ige Lösung von 40.000 mPa.s/25°C.

WDD nach IUP 15 am vernetzten Film von 40 $g/m^2$ beträgt 6 $mg/cm^2$ h.

1.000 g der Haftstrich-Lösung werden mit 50 g eines handelsüblichen Methylolether-Melaminharzes, 50 %ig in Butanol, und 7,5 g einer 20 %igen Lösung von p-Toluolsulfonsäure in Isopropanol versetzt.

Ein im Transferbeschichtungsverfahren hergestellter Artikel von ca. 70 $g/m^2$ PUR-Auflage hat nach IUP 15 gemessen eine Wasserdampfdurchlässigkeit von ca. 4 mg/cm h.

Beispiel 4

Deckstrich (erfindungsgemäß)

170 g eines linearen Polyethers aus 50 Gew.-% Ethylenoxid und 50 Gew.-% Propylenoxid (OHZ 56), gemäß Beispiel 1, 85 g eines Ethylenglykolpolyethers (OHZ 56), 85 g eines Hexandiol/Neopentyl-glykol-polyadipats (OHZ 56) und 340 g eines trifunktionellen Polyethers aus 27,5 Gew.-% Propylenoxid und 72,5 Gew.-% Ethylenoxid (OHZ 36) gemäß Beispiel 1, werden mit 150 g eines Isomerengemisches von 2,4/2,6-Toluylen-diisocyanat (80 : 20), wie im Beispiel 1 beschrieben, umgesetzt und mit 102 g Butanonoxim blockiert. NCO-Gehalt: 5,5 %, Viskosität: 45.000 mPa.s/25°C.

1.000 g dieses hydrophilen, blockierten NCO-Prepolymeren werden mit 155 g 4,4′-Diamino-3,3′-dimethyl-dicyclohexylmetan, gelöst in 150 g Methoxypropylacetat, vermischt. Vernetzung im Beschichtungskanal bei

150 -160°C.

**Patentansprüche**

1. Hitzehärtbare nicht-wäßrige Beschichtungszusammensetzung enthaltend
A) ein durchschnittlich 2 - 4 ketoxim-blockierte NCO-Gruppen aufweisendes Prepolymerisat mit einem durchschnittlichen Molekulargewicht von 500 - 15.000 auf Basis eines aromatischen Polyisocyanats und einer Polyhydroxykomponente, die 40 bis 80 Gew.-% Ethylenoxid-Anteil enthält, und
B) einen Vernetzer der Formel

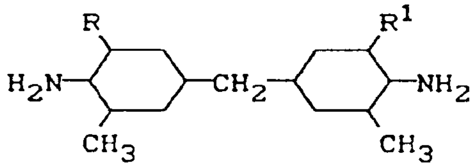

in der R oder $R^1$ H oder $C_1$-$C_4$-Alkyl bezeichnen, wobei das Äquivalentverhältnis von blockierten NCO-Gruppen in A) zu $NH_2$-Gruppen in B) zwischen 1,35 : 1 und 0,95 : 1 liegt.

2. Zusammensetzung gemäß Anspruch 1, enthaltend 4,4′-Diamino-3,3′-dimethyl-dicyclohexylmethan als Vernetzer.

3. Zusammensetzung gemäß den Ansprüchen 1 und 2, enthaltend Zusatzstoffe aus der Reihe Pigmente, Füllstoffe, Lösemittel.

4. Zusammensetzung gemäß den Ansprüchen 1 bis 3 die einen Feststoffgehalt von 35 - 100 Gew.-% aufweist.

5. Zusammensetzung gemäß den Ansprüchen 1 bis 3 die einen Feststoffgehalt von 50 - 90 Gew.-% aufweist.

6. Zusammensetzung gemäß den Ansprüchen 1 bis 5, enthaltend ein Prepnlymerisat auf Basis einer Polyhydroxykomponente, bei der es sich um ein Polyhydroxypolyether-Polyhydroxypolyester-Gemisch handelt.

7. Zusammensetzung gemäß Anspruch 6, wobei das Gemisch einen Polyetheranteil von 30 - 99 Gew.-% hat.

8. Zusammensetzung gemäß Anspruch 6, wobei das Gemisch einen Polyetheranteil von 40 - 90 Gew.-% hat.

9. Zusammensetzung gemäß den Ansprüchen 1 bis 8, enthaltend aliphatische und/oder aromatische Polyurethan-Lösungen.

10. Verfahren zur Herstellung von Beschichtungen, insbesondere von wasserdampfdurchlässigen Beschichtungen, auf Substrate, dadurch gekennzeichnet, daß man Zusammensetzungen gemäß den Ansprüchen 1 bis 9 verwendet.

11. Verfahren gemäß Anspruch 10 zur wasserdampfdurchlässigen Beschichtung von textilen Flächengebilden oder Leder.

**Claims**

1. Heat-curable non-aqueous coating composition comprising
A) a prepolymer which contains on average 2-4 ketoxime-blocked NCO groups, has an average molecular weight of 500-15,000 and is based on an aromatic polyisocyanate and a polyhydroxy component having a 40 to 80% by weight ethylene oxide content and

B) a crosslinking agent of the formula

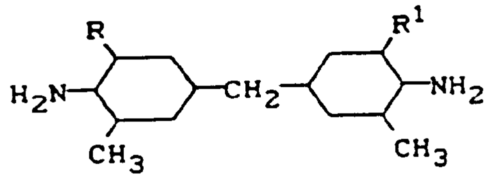

in which R or $R^1$ designates H or $C_1$-$C_4$-alkyl, the ratio of the equivalents of blocked NCO groups in A) to NH2 groups in B) being between 1.35:1 and 0.95:1.

2. Composition according to Claim 1, comprising 4,4′-diamino-3,3′-dimethyl-dicyclohexylmethane as the crosslinking agent.

3. Composition according to Claims 1 and 2, comprising additives from the series of pigments, fillers and solvents.

4. Composition according to Claims 1 to 3, which has a solids content of 35-100% by weight.

5. Composition according to Claims 1 to 3, which has a solids content of 50-90% by weight.

6. Composition according to Claims 1 to 5, comprising a prepolymer based on a polyhydroxy component which is a polyhydroxy-polyether/polyhydroxy-polyester mixture.

7. Composition according to Claim 6, wherein the mixture has a polyether content of 30-99% by weight.

8. Composition according to Claim 6, wherein the mixture has a polyether content of 40-90% by weight.

9. Composition according to Claims 1 to 8, comprising aliphatic and/or aromatic polyurethane solutions.

10. Process for the production of coatings, in particular coatings which are permeable to water vapour, on substrates, characterised in that compositions according to Claims 1 to 9 are used.

11. Process according to Claim 10 for coating textile sheet-like structures or leather with a coating which is permeable to water vapour.

## Revendications

1. Composition de revêtement non aqueuse, thermodurcissable, contenant
A) un prépolymére portant en moyenne 2 à 4 groupes NCO bloqués par des cétoximes, à un poids moléculaire moyen de 5 000 à 15 000, à base d'un polyisocyanate aromatique et d'un composant polyhydroxylé qui contient de 40 à 80 % en poids d'oxyde d'éthylène, et
B) un agent réticulant de formule

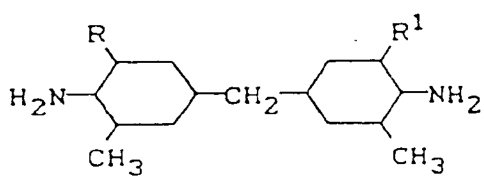

dans laquelle R ou $R^1$ représente H ou un groupe alkyle en $C_1$-$C_4$, avec un rapport de 1,35 : 1 à 0;95 : 1 entre les équivalents de groupes NCO bloqués de A) et les équivalents de groupes $NH_2$ de B).

2. Composition selon l'invention 1, contenant en tant qu'agent réticulant le 4,4′-diamino-3,3′-diméthyl-dicyclohexylméthane.

3. Composition selon les revendications 1 et 2 contenant des additifs choisis parmi les pigments, les matières

de charge, les solvants.

**4.** Composition selon les revendications 1 à 3, ayant une teneur en matières solides de 35 à 100 % en poids.

**5.** Composition selon les revendications 1 à 3, ayant ayant une teneur en matières solides de 50 à 90 % en poids.

**6.** Composition selon les revendications 1 a 5, contenant un prépolymère à base d'un composant polyhydroxylé consistant lui-même en un mélange de polyhydroxyoolyéthers et de polyhydroxypolyesters.

**7.** Composition selon la revendication 6, dans laquelle le mélange est à une teneur en polyéther de 30 à 99 % en poids.

**8.** Composition selon la revendication 6, dans laquelle le mélange est à une teneur en polyéther de 40 à 90 % en poids.

**9.** Composition selon les revendications 1 à 8, contenant des solutions de polyuréthannes aliphatiques et/ou aromatiques.

**10.** Procédé pour l'application de revêtements en particulier de revêtements perméables à la vapeur d'eau, sur des substrats, caractérisé en ce que l'on utilise des compositions selon les revendications 1 à 9.

**11.** Procédé selon la revendication 10, pour l'application de revêtements perméables à la vapeur d'eau sur des articles planiformes textiles ou le cuir.